# EUROPEAN PATENT SPECIFICATION

(11) **EP 0 629 167 B1**
(45) Date of publication and mention of the grant of the patent: **03.01.1996**
(21) Application number: 93908143.6
(22) Date of filing: 10.03.1993
(51) Int. Cl.: B65B 51/30

(54) **DEVICE FOR PACKAGING ARTICLES IN FILM**
VORRICHTUNG ZUM VERPACKEN VON GEGENSTÄNDEN IN FOLIE
DISPOSITIF DE CONDITIONNEMENT D'ARTICLES AU MOYEN D'UNE FEUILLE

(30) Priority: 11.03.1992 NL 9200450
(43) Date of publication of application: 21.12.1994
(73) Proprietor: Sollas Holland B.V., NL-1531 AX Wormer (NL)
(72) Inventor: SCHOENMAKERS, Peter, Maria, Antonius, NL-5911 AN Venlo (NL)
(74) Representative: Mommaerts, Johan Hendrik, Dipl.-Phys.
(86) International application number: NL9300055
(87) International publication number: WO9317914

(56) References cited:
- DE-A- 2 551 139
- FR-A- 2 129 766
- FR-A- 2 446 172
- FR-A- 2 606 366
- GB-A- 1 072 287
- GB-A- 1 264 568
- US-A- 3 927 507

## Description

Device for packaging articles in film, comprising conveyors for moving the articles along a route at an essentially constant speed, feed devices for feeding two film webs at the top and bottom side of the articles, parallel to the route, a separating and welding device for forming a separating weld across the route between successive articles, which separating and welding device comprises a welding and cutting unit at one side and a counterpressure unit at the opposite side of the route, and also drive means for moving the welding and cutting unit at a continuous speed, save in a possible rest position, along a substantially elliptical path, the film webs for forming the separating weld being clamped over a part of this path between the welding and cutting unit and a contact face of the couterpressure unit, and the film webs during the clamping running at a speed which in magnitude and direction is essentially equal to that of the articles to be packaged.

Such a device is known from GB 1 264 568. The drive means of the cutting and welding unit of the known device comprises a linkage system. The cutting and welding unit of the known device is placed between two arms, each provided with an elongated slot through which a shaft fixed to the base of the device extends. At their upper ends each of the arms is pivotally connected to a lever arm. Each lever arm is pivotally connected to a link which is in turn pivotaly connected to the base of the device.

At a point intermediate their ends the lever arms are each connected to a cranck wheel, both cranck wheels being fixed on a common shaft. When this shaft is rotatably driven this drive means provides an essentially elliptical movement of the cutting and welding unit of the device, the major axis being substantially at right angles to the route along which the articles are moved.

A roller journalled on a shaft fixed to the base of the device forms the counter pressure unit of the known device.

The known device has the disadvantage that the drive means thereof, as described above, constitutes a limitation for the operating speed of the device, especially in view of the size of the products to be packaged. This is caused by the large movements of the heavy arms of the drive means. The combination of the accellerations of said moving parts and the weight thereof results in large forces, e.g. at the pivot points, leading to excessive wear and resulting maintenance costs.

Furthermore the drive means of the known device do not allow a simple adjustment of the height of travel of the welding and cutting unit to the height of the product to be packaged.

The object of the invention is then to eliminate the abovementioned disadvantages and to provide a device with an improved drive means for the cutting and welding unit.

To meet this object the invention provides a device of the type mentioned in the preamble, which is characterized in that the drive means consist of a frame which can move in a rectilinear guide, a rotatable intermediate shaft in the frame, a fixed hinge shaft extending parallel to the intermediate shaft, a movable arm which is pivotally connected to the hinge shaft at one end, and at the other end is rotatably connected to an eccentric part of the intermediate shaft, and a rotary shaft lying in line with the hinge shaft, transmission means, being present between said shaft and the eccentric part of the intermediate shaft, in order to provide the rotary drive of the eccentric shaft of the intermediate shaft, and also two shafts which are rotatably disposed in the frame and are connected to the intermediate shaft in such a way that their speeds of rotation are equal in magnitude to that of the intermediate shaft, which two shafts are each provided with an eccentric arm which arms are of equal lengths and have the same orientations in each position, and are each rotatably mounted with their eccentric ends in a bearing plate for the welding and cutting unit.

In this way, the welding and cutting device, for example driven by an electric motor with a single-stroke clutch, makes an elliptical movement, while maintaining the same orientation.

High packaging speeds can be obtained in this way, while only slight accelerations occur in the device.

For proper functioning of the device, it is necessary for the path to have a part lying essentially parallel to the route, which is at least equal in length to the distance required for making the separating weld, and for the path to have a part on which the welding and cutting unit is sufficiently far away from the route to allow even the tallest article to be packaged through between the welding and cutting unit and the counterpressure unit.

Preferably the elliptical path has a minimum radius of curvature in the part where the clamping of the film webs takes place, and a maximum radius of curvature in the part where the welding and cutting unit moves towards or away from the counterpressure unit. In this way, the part lying parallel to the route can be made as short as possible, so that the welding and cutting device does not undergo any unnecessary movement and is available as quickly as possible again for making the next weld, so that high throughput speeds can be achieved, or short articles can be packaged.

The device can be provided with detection and control means, which are designed to set the feed devices for the film webs in motion when an article to be packaged arrives at the welding and cutting unit, and after said article has passed through, to make the welding and cutting unit run through the closed path once, from a rest position situated thereon. It is thus possible to pack articles of widely differing sizes directly after one another, without the machine having to be adjusted between them.

The distance to be travelled by the welding and cutting unit can be reduced by making the counterpressure unit also carry out a movement, in which it is placed at a distance from the route and is moved to a position adjacent to the route in synchronism with the welding and cutting unit each time a separating weld is being formed, the path travelled by the counterpressure unit being a smooth curve along which the speed is continuous.

The counterpressure unit is preferably spring-mounted under pre-tension, in such a way that it can be pressed away from the route by the welding and cutting unit. In this way, the counterpressure unit can accommodate the curve of the path travelled by the welding and cutting unit while the separating weld is being made. In addition, for this purpose the counterpressure unit can comprise a conveyor belt or a roller with an elastic surface which serves as the contact surface of the counterpressure unit. The elastic surface can be pressed in by the welding and cutting unit during the formation of the separating weld, which makes it easier to accommodate the curve of the path travelled by said unit. The counterpressure unit in this case is preferably provided with a silicone rubber cladding, with a layer of elastic foam underneath.

It is advantageous to provide the feed devices with tensioning means, which hold at least one film web under tension during the passage of each article to be packaged, and which release the tension from it after the passage of an article, for the purpose of making a separating weld. This promotes the formation of a flawless welded join and cut seam. This is further improved by a device in which the welding and cutting unit comprises an elongated cutter, which is enclosed on either side by welding faces lying in one plane, which welding faces extend along said cutter and at right angles to the cutting device thereof.

The invention will now be explained in greater detail with reference to the drawing of a packaging device according to the invention, in which:
Fig. 1 shows a diagrammatic side view of a part of the packaging device, in which the separating and welding device is in a rest position;
Figs. 2 and 3, show views corresponding to Fig. 1 of the separating and welding device in different positions; and
Fig. 4 shows a detail of Fig. 3 on a larger scale.

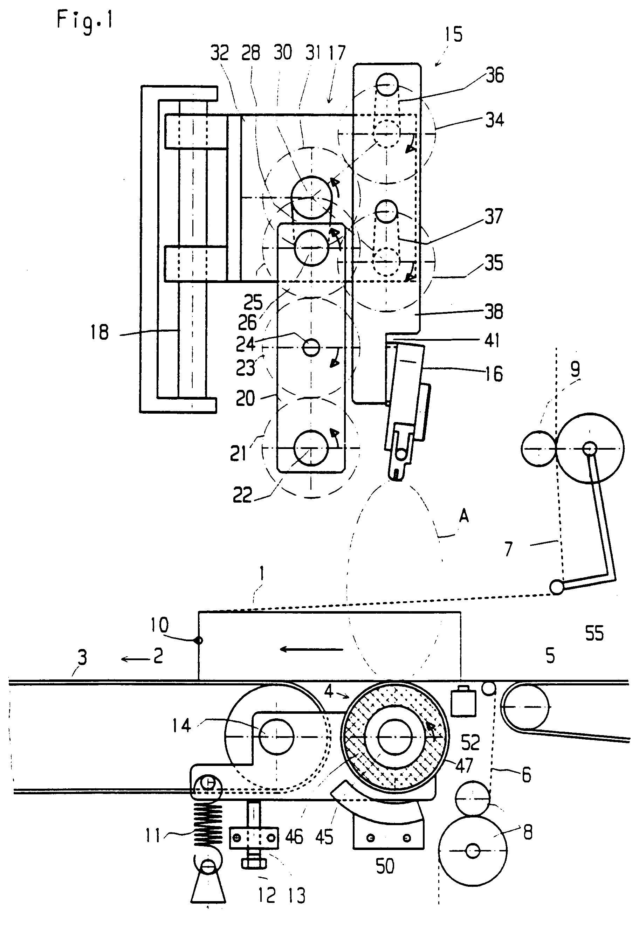

Fig. 1 shows an article 1 to be packaged, which article moves along route 2 of the packaging machine. The route 2 is formed by a conveyor belt 3 and a counterpressure roller 4. The article 1 is supplied to the packaging machine by a conveyor belt 5, and is discharged by a conveyor belt 3 to other parts of the packaging device, including a device for welding the film webs parallel to the route. Two film webs are used for packaging the article 1: a lower film 6 and an upper film 7, which come from stock rolls which are not shown. A lower pair 8 of rolls and an upper pair 9 of rolls are used to feed the film webs 6 and 7 respectively. The lower film 6 and upper film 7 have already been welded to each other along a seam 10 during an earlier welding and cutting operation. A separating and welding device 15 is used for producing a separating weld at right angles to the film webs behind the advancing article 1. Said device comprises a welding and cutting unit 16, which can be moved by means of a drive mechanism 17 and a rectilinear guide 18, which is fixed in the packaging machine.

The drive mechanism 17 and the rectilinear guide 18 are arranged in such a way that the welding and cutting unit 16 can carry out an elliptical movement. For this purpose, a movable arm 20 and a gear wheel 21 are rotatably fixed on a hinge shaft 22, which is fixed in the packaging machine. A gear wheel 23 which can rotate on the bearing pin 24 fixed on the movable arm 20, and thus also a gear wheel 25, can be driven by rotating the gear wheel 21 in the direction of the arrow shown therein. The gear wheel 25 is fixed to a shaft 26, which projects rotatably through the movable arm 20 and at the other end is provided with a crank 28, which in turn is fixed to a shaft 30. The shaft 30 is provided with a gear wheel 31 fixed thereto, and projects into a movable frame 32 of the separating and welding device 15. The frame 32 is slidable on the rectilinear guide 18. When the gear wheel 25, and thus the crank 28, is rotated, the frame 32 moves up and down. Since the gear wheels 21, 23, 25 have equal numbers of identical teeth, one rotation of gear wheel 21 causes an up and down movement of the frame 32 along the guide.

Mounted on the frame 32 are also two gear wheels 34 and 35, which mesh with the gear wheel 31. These three gear wheels 31, 34, 35 also have the same number of teeth. The gear wheels 34 and 35 are connected by means of a crank 36, 37 respectively to a bearing plate 38, the cranks 36 and 37 always pointing in the same direction. The arrows shown in the gear wheels here again indicate the direction of movement of the gear wheels 31, 34 and 35. The welding and cutting unit 16 is placed at an angle relative to the rectilinear guide 18 by means of a wedge 41, which is accommodated between the welding and cutting unit 16 and the bearing plate 38.

Opposite the separating and welding device 15, and at the opposite side of the route 2, lies the counterpressure roller 4, which is accommodated at a fixed point in the packaging machine. The counterpressure roller 4 has a steel core 45, which is clad with a resilient foam layer 46 and an outer casing 47. The outer casing 47 is made of silicone rubber. The counterpressure roller 4 is heated on the outer perimeter by a heating element 50.

When the welding and cutting unit 15 presses against the counterpressure roller 4, the latter moves down a little, thus accommodating the curve of the path travelled by the former. For this purpose, the counterpressure roller 4 is pressed by a spring 11 under pre-tension against an adjustable stop in the form of the adjusting screw 12, which is adjustable relative to the machine by means of block 13, and can turn about the shaft 14 fixed to the machine.

Provision is made along the route 2 for a photoelectric cell 52, which detects the arrival at the welding and cutting unit of the article to be packaged, and then by means of control devices (not shown) makes the pairs of rolls 8, 9 rotate, in order to feed film. After the passage of the article 1, the photoelectric cell 52, again by means of control devices, activates the welding and cutting unit, which then makes a new separating weld at the right side of the article 1 during the passage through the elliptical curve A. It is thus possible to package articles of widely differing lengths directly after one another. The upper film 7 is relieved of tension by a tension release lever 55 before each separating weld is produced. This tension release reduces the stresses occurring in the film, which makes it possible to use very thin film.

The separating and welding device works as follows:
The article 1 is brought in by the conveyor belt 5, and comes into contact with the upper film 6 and lower film 7, which have been welded together, at approximately the level of the counterpressure roller 4. The article 1 is moved further and then takes the two film webs 6 and 7 being simultaneously supplied by the lower and upper pair of rolls 8 and 9 along with it. The separating and welding device 15 is now situated at some distance from the route in a rest position, as shown in Fig. 1. As soon as the photoelectric cell 52 detects the end of the passage of the article 1, it transmits a signal for activation of the separating and welding device 15.

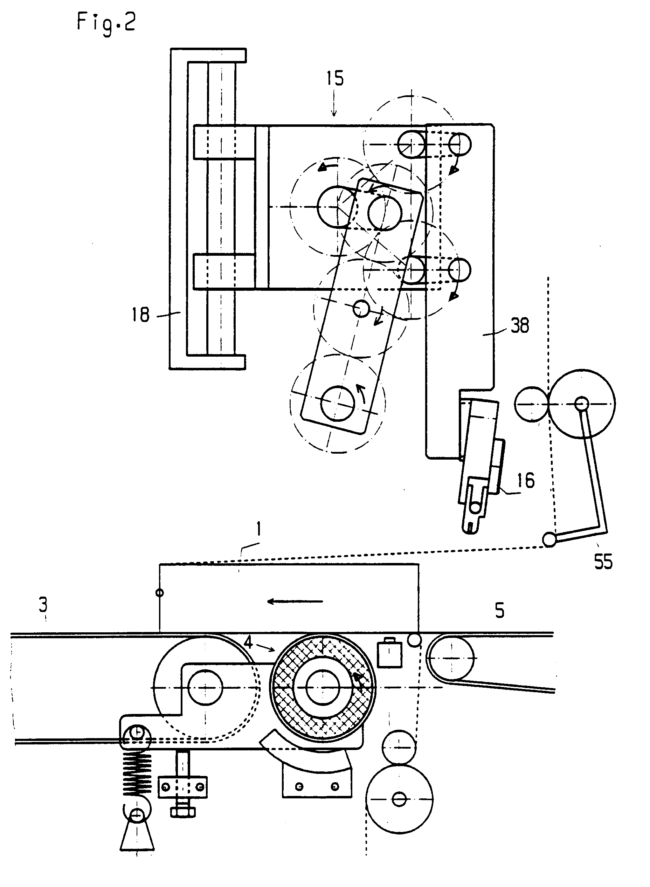

Fig. 2 shows the welding and cutting unit 16 in the position furthest to the right.

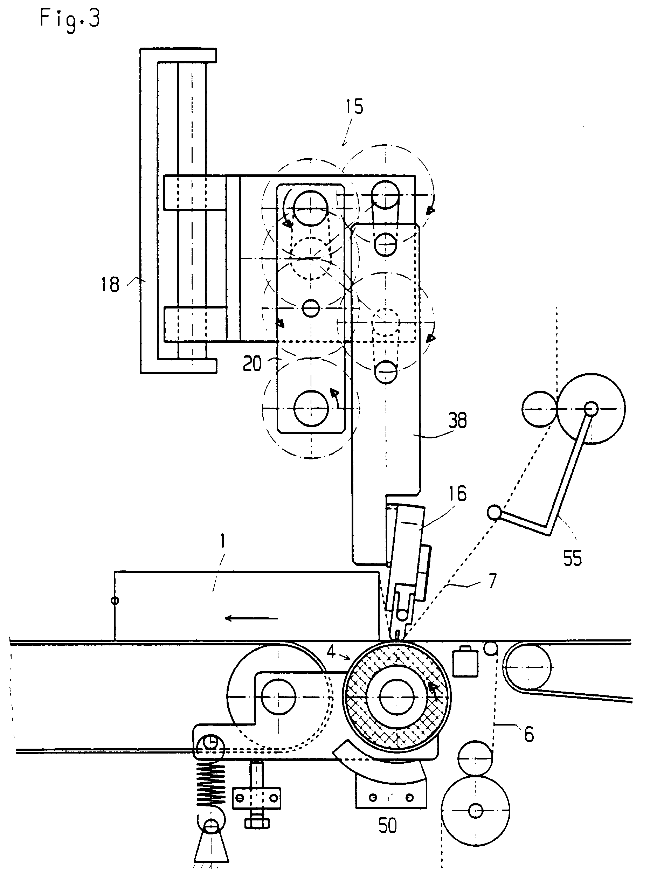

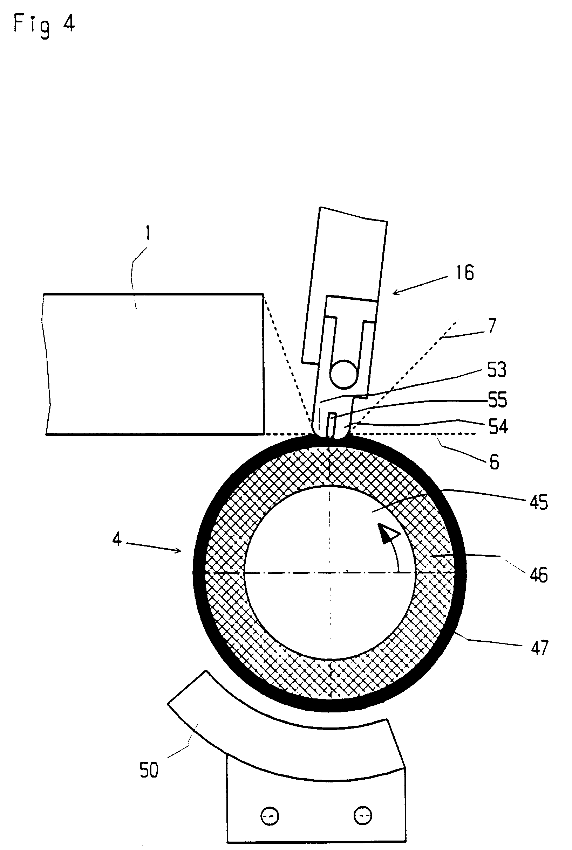

Fig. 3 shows the separating and welding device 15 at the moment of welding and separating. Shortly before this, the tension release lever 55 is moved to the left for this purpose, with the result that a part of the upper film 7 can sink onto the lower film 6. The heated welding and cutting unit 16 presses the two film webs onto the counterpressure roller 4. This is shown in detail in Fig. 4.

What is essential for the invention is that the welding and cutting unit 16 near the lowest point of its movement path, viewed in the direction of throughput, should run at a speed which corresponds to the speed of the still advancing article 1. Since the outer perimeter of the counterpressure roller 4 is also moving at this speed, a short route for producing the separating weld therefore results, and the article does not need to undergo any change in speed.

Fig. 4 shows a detail of the contact between the cutting/welding beam 16 and the lower roller 4. The welding and cutting unit has two heated welding elements 53 and 54 and between them a cutter beam 55, which is also heated. When the bottom part of the movement route is being passed through, the welding and cutting unit presses into the spring-loaded counterpressure roller 4. This is possible through the composition of the counterpressure roller with the steel core 45, the elastic foam layer 46 and the outer casing 47 of silicone rubber. In practice, the compression amounts to a few millimetres.
This gives rise to a short route for producing the separating weld, which consists of two parallel welded seams, between which the film webs 6 and 7 are severed by the cutter beam 55. The heat required for the welding and cutting is supplied not only by the welding and cutting unit 16, but also by the counterpressure roller 4, which is heated on the outside by the heating element 50. This means that less heat needs to be supplied by the welding and cutting unit 16, and the separating weld can be produced in the available short time.

For synchronisation of the movements of the counterpressure roller 4 and of the welding and cutting unit 16, the drive of the gear wheel 21 is taken directly from the drive of the counterpressure roller 4, which is connected by means of a chain transmission and a single-stage clutch to a drive motor, with the result that, after the activation of the clutch by the photoelectric cell 52, the welding and cutting unit just passes once through the ellipse. A simple synchronisation of the entire packaging machine is obtained by also connecting the conveyor belt 3 to the same drive.

The wedge 41 between the welding and cutting unit 16 and the welding and cutting unit holder 38 ensures that the two welding elements 53 and 54 come into contact simultaneously with the film web 7.

The distance over which the frame 32 moves along the rectilinear guide 18 can be altered by adjusting the length of the crank 28.

The device shown in the figures can thus package articles of widely differing heights and lengths at great speed, while the accelerations occurring in the device are greatly reduced, due to the fact that the welding and cutting unit passes through a smooth curve, rather than an angular one.

## Claims

1. Device for packaging articles in film, comprising conveyors (3, 5) for moving the articles (1) along a route (2) at an essentially constant speed, feed devices (8, 9) for feeding two film webs (6, 7) at the top and bottom side of the articles, parallel to the route, a separating and welding device (15) for forming a separating weld across the route between successive articles, which separating and welding device comprises a welding and cutting unit (16) at one side and a counterpressure unit (4) at the opposite side of the route, and also drive means (17) for moving the welding and cutting unit at a continuous speed, save in a possible rest position, along a substantially elliptical path (A), the film webs for forming the separating weld being clamped over a part of this path between the welding and cutting unit and a contact face of the counterpressure unit, and the film webs during the clamping running at a speed which in magnitude and direction is essentially equal to that of the articles to be packaged, **characterized in that** the drive means (17) consist of a frame (32) which can move in a rectilinear guide (18), a rotatable intermediate shaft (30) in the frame, a fixed hinge shaft (22) extending parallel to the intermediate shaft, a movable arm (20) which is pivotally connected to the hinge shaft (22) at one end, and at the other end is rotatably connected to an eccentric part (28) of the intermediate shaft (30), and a rotary shaft lying in line with the hinge shaft, transmission means (21, 23, 25) being present between said shaft and the eccentric part of the intermediate shaft, in order to provide the rotary drive of the eccentric part (28) of the intermediate shaft (30), and also two shafts (34, 35) which are rotatably disposed in the frame (32) and are connected to the intermediate shaft (30) in such a way that their speeds of rotation are equal in magnitude to that of the intermediate shaft, which two shafts (34, 35) are each provided with an eccentric arm (36, 37), which arms are of equal lengths and have the same orientations in each position, and are each rotatably mounted with their eccentric end in a bearing plate (38) for the welding and cutting unit (16).

2. Device according to claim 1, **characterized in that** the device is provided with detection and control means (52), which are designed to set the feed devices (8, 9) for the film webs (6, 7) in motion when an article (1) to be packaged arrives at the welding and cutting unit (16), and after said article has passed through, to make the welding and cutting unit run through the path (A) once, from a rest position situated thereon.

3. Device according to one of the preceding claims, **characterized in that** the counterpressure unit (4) is placed at a distance from the route (2) and is moved to a position adjacent to the route in synchronism with the welding and cutting unit (16) each time a separating weld is being formed.

4. Device according to one of the claims 1-2, **characterized in that** the counterpressure unit (4) is spring-mounted, under pre-tension or otherwise, in such a way that it can be pressed away from the route by the welding and cutting unit (16).

5. Device according to one of the preceding claims, **characterized in that** the counterpressure unit (4) comprises a conveyor belt or a roller with an elastic surface which serves as the contact surface of the counterpressure unit.

6. Device according to claim 5**, characterized in that** the counterpressure unit (4) has a silicone rubber cladding (47), with a layer of elastic foam (46) underneath.

7. Device according to one of the preceding claims, **characterized in that** heating means (50), which can heat the counterpressure unit (4), are present.

8. Device according to one of the preceding claims, **characterized in that** the feed devices (8, 9) comprise tensioning means (55), which hold at least one film web (7) under tension during the passage of each article (1) to be packaged, and which release the tension from it after the passage of an article, for the purpose of making a separating weld.

9. Device according to one of the preceding claims, **characterized in that** the welding and cutting unit (16) comprises an elongated cutter (55), which is enclosed on either side by welding faces (53, 54) lying in one plane, which welding faces extend along said cutter and at right angles to the cutting device thereof.

## Patentansprüche

1. Vorrichtung zum Verpacken von Gegenständen in Folie, die aufweist: Fördereinrichtungen (3, 5), die die Gegenstände (1) entlang eines Weges (2) mit im wesentlichen konstanter Geschwindigkeit bewegen, Fördervorrichtungen (8, 9), die die zwei Folienbahnen (6, 7) an der oberen Seite und der unteren Seite der Gegenstände parallel zum Weg fördern, eine Trenn-und-Schweiß-Vorrichtung (15), die über den Weg zwischen aufeinanderfolgenden Gegenständen eine Trennschweißnaht bildet, wobei die Trenn-und-Schweiß-Vorrichtung an einer Seite eine Schweiß-und-Schneid-Einheit (16) und an der entgegengesetzten Seite des Weges eine Gegendruck-Einheit (4) aufweist, und ebenfalls eine Antriebseinrichtung (17), die die Schweiß-und-Schneid-Einheit mit kontinuierlicher Geschwindigkeit, außer in einer möglichen Ruheposition, entlang eines im wesentlichen elliptischen Pfades (A) bewegt, wobei die Folienbahnen zum Ausbilden der Trennschweißnaht über einen Teil dieses Pfades zwischen der Schweiß-und-Schneid-Einheit und einer Kontaktfläche der Gegendruck-Einheit festgeklemmt sind und die Folienbahnen während des Festklemmens mit einer Geschwindigkeit laufen, deren Größe und Richtung im wesentlichen gleich der der zu verpackenden Gegenstände ist,
dadurch gekennzeichnet, daß
die Antriebseinrichtung (17) besteht: aus einem Rahmen (32), der sich in einer geradlinigen Führung (18) bewegen kann, einer drehbaren Zwischenwelle (30) im Rahmen, einer ortsfesten Drehwelle (22), die sich parallel zur Zwischenwelle erstreckt, einem beweglichen Arm (20), der an einem Ende mit der Drehwelle (22) und am anderen Ende mit einem exzentrischen Abschnitt (28) der Zwischenwelle (30) drehbar verbunden ist, und einer Rotationswelle, die mit der Drehwelle ausgerichtet ist, wobei zwischen diese Rotationswelle und dem exzentrischen Abschnitt der Zwischenwelle eine Übertragungseinrichtung (21, 23, 25) vorliegt, damit der Drehantrieb des exzentrischen Abschnitts (28) der Zwischenwelle (30) vorgesehen wird, und ebenfalls aus zwei Wellen (34, 35), die im Rahmen (32) drehbar sind und mit der Zwischenwelle (30) in einer solchen Weise verbunden sind, daß die Größe ihrer Rotationsgeschwindigkeiten gleich der der Zwischenwelle ist, wobei die zwei Wellen (34, 35) jeweils mit einem exzentrischen Arm (36, 37) versehen sind, wobei die Arme gleiche Längen und in jeder Position die gleiche Ausrichtung haben, und jeder mit seinem exzentrischen Ende in einer Lagerplatte (38) für die Schweiß-und-Schneid-Einheit (16) drehbar montiert ist.

2. Vorrichtung nach Anspruch 1, die dadurch gekennzeichnet ist, daß die Vorrichtung mit einer Erfassungs-und-Steuer-Einrichtung (52) versehen ist, die so gestaltet ist, daß diese die Fördervorrichtungen (8, 9) für die Folienbahnen (6, 7) in Bewegung setzt, wenn ein zu verpackender Gegenstand (1) an der Schweiß-und-Schneid-Einheit (16) eintrifft, und daß diese nach dem Durchgang des Gegenstandes bewirkt, daß die Schweiß-und-Schneid-Einheit einmal den Pfad (A) durchläuft, wobei von einer Ruheposition, die sich auf diesem befindet, ausgegangen wird.

3. Vorrichtung nach einem der vorhergehenden Ansprüche, die dadurch gekennzeichnet ist, daß die Gegendruck-Einheit (4) in einer Entfernung zum Weg (2) positioniert ist und zu jedem Zeitpunkt der Ausbildung einer Trennschweißnaht synchron mit der Schweiß-und-Schneid-Einheit (16) in eine Position benachbart zum Weg bewegt wird.

4. Vorrichtung nach einem der Ansprüche 1, 2, die dadurch gekennzeichnet ist, daß die Gegendruck-Einheit (4) unter Vorspannung oder in anderer Weise in einer solchen Weise durch eine Feder montiert ist, daß diese durch die Schweiß-und-Schneid-Einheit (16) vom Weg weggedrückt werden kann.

5. Vorrichtung nach einem der vorhergehenden Ansprüche, die dadurch gekennzeichnet ist, daß die Gegendruck-Einheit (4) einen Förderriemen oder eine Walze mit einer elastischen Oberfläche aufweist, die als Kontaktoberfläche der Gegendruck-Einheit dient.

6. Vorrichtung nach Anspruch 5, die dadurch gekennzeichnet ist, daß die Gegendruck-Einheit (4) eine Silikongummi-Umhüllung (47) hat, wobei sich eine Schicht (46) aus elastischem Schaum darunter befindet.

7. Vorrichtung nach einem der vorhergehenden Patentansprüche, die dadurch gekennzeichnet ist, daß eine Heizeinrichtung (50), die die Gegendruck-Einheit (4) erwärmen kann, vorliegt.

8. Vorrichtung nach einem der vorhergehenden Ansprüche, die dadurch gekennzeichnet ist, daß die Fördervorrichtungen (8, 9) eine Spanneinrichtung (55) aufweisen, die zumindest eine Folienbahn (7) während des Durchganges von jedem zu verpackenden Gegenstand (1) unter Spannung hält, und nach dem Durchgang eines Gegenstandes zum Zwecke der Ausbildung einer Trennschweißnaht die Spannung von dieser freigibt.

9. Vorrichtung nach einem der vorhergehenden Ansprüche, die dadurch gekennzeichnet ist, daß die Schweiß-und-Schneid-Einheit (16) ein längliches Schneidelement (55) aufweist, das an beiden Seiten durch Schweißflächen (53, 54), die in einer Ebene liegen, eingeschlossen ist, wobei sich die Schweißflächen entlang des Schneidelements und in rechten Winkeln zu seiner Schneidvorrichtung erstrecken.

## Revendications

1. Dispositif d'emballage d'articles au moyen de feuille, comprenant des convoyeurs (3, 5) destinés à déplacer les articles (1) suivant une trajectoire (2) avec une vitesse sensiblement constante, des dispositifs (8, 9) d'alimentation destinés à alimenter deux bandes de feuille (6, 7) sur les faces supérieure et inférieure des articles, en parallèle à la trajectoire, un dispositif (15) de séparation et de soudage destiné à former une soudure de séparation à travers la trajectoire entre les article successifs, ledit dispositif de séparation et de soudage comprend une unité (16) de soudage et de découpe sur un côté et une unité (4) d'application de contre-pression sur le côté opposé de la trajectoire, et aussi un moyen (17) d'entraînement destiné à déplacer l'unité de soudage et de découpe à vitesse continue, à l'exception d'une position de repos possible, le long d'un circuit sensiblement elliptique (A), les bandes de feuille destinées à former la soudure de séparation étant bloquées sur une partie de ce circuit, entre l'unité de soudage et de découpe et une face de contact de l'unité d'application de contre-pression, et les bandes de feuille pendant le blocage se déplaçant avec une vitesse qui est d'amplitude et de sens sensiblement identiques à ceux des articles à emballer, caractérisé en ce que le moyen (17) d'entraînement consiste en une structure (32) qui peut se déplacer dans un guide linéaire (18), un arbre intermédiaire tournant (30) dans la structure, un arbre charnière fixe (22) s'étendant en parallèle de l'arbre intermédiaire, un bras mobile (20) qui est relié de façon à pouvoir pivoter sur l'arbre charnière (22) à une extrémité, et à l'autre extrémité est relié de façon à pouvoir tourner par rapport à une partie excentrée (28) de l'arbre (30) intermédiaire, et un arbre tournant disposé dans l'alignement de l'arbre charnière, des moyens (21, 23, 25) de transmission étant présents entre ledit arbre et ladite partie excentrée de l'arbre intermédiaire, dans le but de produire l'entraînement en rotation de la partie excentrée (28) de l'arbre intermédiaire (30), et aussi deux arbres (34, 35) qui sont disposés de façon à pouvoir tourner dans la structure (32) et qui sont reliés à l'arbre intermédiaire (30) d'une telle manière que leur vitesse de rotation soit d'amplitude égale à celle de l'arbre intermédiaire, lesdits deux arbres (34, 35) sont chacun pourvus d'un bras excentré (36, 37), lesquels bras sont de longueurs égales et présentent les mêmes orientations dans chaque position, et sont montés chacun de façon à pouvoir tourner avec leurs extrémités excentrées dans une plaque (38) support pour l'unité de soudage et de découpe (16).

2. Dispositif selon la revendication 1, caractérisé en ce que le dispositif est pourvu de moyens de détection et de commande (52), qui sont conçus pour régler les dispositifs (8, 9) d'alimentation des bandes de feuille (6, 7) en mouvement lorsqu'un article (1) à emballer arrive sur l'unité (16) de soudage et de découpe, et après que ledit article soit passé à travers, pour faire en sorte que l'unité de soudage et de découpe se déplace une fois suivant le circuit (A), à partir d'une position de repos située sur celui-ci.

3. Dispositif selon l'une quelconque des revendications précédentes, caractérisé en ce que l'unité (4) d'application de contre-pression est placée à une certaine distance de la trajectoire (2) et est déplacée vers une position adjacente à la trajectoire de façon synchronisée avec l'unité de soudage et de découpe (16) chaque fois qu'une soudure de séparation est formée.

4. Dispositif selon l'une des revendications 1 et 2, caractérisé en ce que l'unité d'application de contre-pression (2) est montée sur ressort, sous une pré-contrainte ou analogue, d'une telle manière qu'elle puisse être appliquée à l'écart de la trajectoire par l'unité (16) de soudage et de découpe.

5. Dispositif selon l'une quelconque des revendications précédentes, caractérisé en ce que l'unité (4) d'application de contre-pression comprend un convoyeur à bande ou un rouleau disposant d'une surface élastique qui sert de surface de contact de l'unité d'application de contre-pression.

6. Dispositif selon la revendication 5, caractérisé en ce que l'unité (4) d'application de contre-pression est pourvue d'un revêtement (47) en caoutchouc aux silicones, avec une couche (46) de mousse élastique au-dessous.

7. Dispositif selon l'une quelconque des revendications précédentes, caractérisé en ce que des moyens de chauffage (50), qui peuvent chauffer l'unité (4) d'application de contre-pression sont présents.

8. Dispositif selon l'une quelconque des revendications précédentes, caractérisé en ce que les dispositifs (8, 9) d'alimentation comprennent des moyens de mise sous tension (55), qui maintiennent au moins une bande de feuille (7) sous tension lors du passage de chaque article (1) à emballer, et qui relâche la tension de celle-ci après le passage d'un article, pour les besoins de la réalisation de la soudure de séparation.

9. Dispositif selon l'une quelconque des revendications précédentes, caractérisé en ce que l'unité de soudage et de découpe (16) comprend un couteau allongé (55), qui est entouré de chaque côté par les faces de soudage (53, 54) disposées dans un plan, lesdits faces de soudage s'étendent le long dudit couteau et formant des angles droits par rapport au dispositif de découpe de celui-ci.
